(19) Europäisches Patentamt
European Patent Office
Office européen des brevets

(11) **EP 2 866 365 B1**

(12) **FASCICULE DE BREVET EUROPEEN**

(45) Date de publication et mention
de la délivrance du brevet:
**17.07.2019 Bulletin 2019/29**

(51) Int Cl.:
***H04J 3/06*** (2006.01)

(21) Numéro de dépôt: **14190219.7**

(22) Date de dépôt: **24.10.2014**

(54) **Procédé et système de synchronisation horaire entre deux dispositifs connectés par une liaison Ethernet**

Verfahren und System zur Zeitsynchronisation zwischen zwei durch eine Ethernet-Verbindung verbundenen Geräten

Method and system for time synchronization between two device connected by an Ethernet link

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.10.2013 FR 1302472**

(43) Date de publication de la demande:
**29.04.2015 Bulletin 2015/18**

(73) Titulaire: **Thales**
**92400 Courbevoie (FR)**

(72) Inventeurs:
• **Philippe, Jean-Yves**
**92622 Gennevilliers Cedex (FR)**
• **Pierrelee, Olivier**
**92622 Gennevilliers Cedex (FR)**

(74) Mandataire: **Priori, Enrico**
**Marks & Clerk France**
**Immeuble "Visium"**
**22, avenue Aristide Briand**
**94117 Arcueil Cedex (FR)**

(56) Documents cités:
**US-A1- 2011 161 701    US-A1- 2012 136 956**
**US-A1- 2012 275 501    US-A1- 2013 202 291**

• **PEDRO MOREIRA ET AL: "White rabbit: Sub-nanosecond timing distribution over ethernet", 2009 INTERNATIONAL SYMPOSIUM ON PRECISION CLOCK SYNCHRONIZATION FOR MEASUREMENT, CONTROL AND COMMUNICATION, 1 octobre 2009 (2009-10-01), pages 1-5, XP055129031, DOI: 10.1109/ISPCS.2009.5340196 ISBN: 978-1-42-444391-8**
• **"IEEE Standard for a Precision Clock Synchronization Protocol for Networked Measurement and Control Systems;IEEE Std 1588-2008 (Revision of IEEE Std 1588-2002) ED - Anonymous", IEEE STANDARD; [IEEE STANDARD], IEEE, PISCATAWAY, NJ, USA, 24 July 2008 (2008-07-24), pages c1-269, XP017604130, ISBN: 978-0-7381-5400-8**

**EP 2 866 365 B1**

## Description

La présente invention concerne un procédé et un système de synchronisation horaire entre deux dispositifs ayant des horloges pouvant être indépendantes. En effet dans le cadre des équipements de radio communication tactique, il peut être nécessaire de raccorder des équipements complémentaires distants de plusieurs mètres, mais entre lesquels il est nécessaire que les horloges soient synchronisées avec une précision de moins de 1μs. Ce procédé et système peuvent également s'appliquer entre deux dispositifs proches tout en bénéficiant de la compacité de l'interface proposée.

Il est connu dans l'état de la technique des systèmes et procédés qui utilisent une interface de liaison entre les équipements. Ces liaisons comportent un ou plusieurs fils dédiés uniquement au transport d'un signal spécifique permettant la synchronisation. Cependant cette solution ne permet pas d'avoir une interface de liaison standard car elle impose un signal en plus, un circuit spécifique en plus, une connectique en plus, un protocole spécifique. Par ailleurs, l'information acheminée par ce signal bufferisé n'a pas la même latence que la trame Mac Ethernet sur son interface. Par trame Mac Ethernet on entend un paquet de données transmis en utilisant le protocole de réseau local Ethernet. En effet le circuit en charge de la gestion de l'interface de liaison émet directement le signal alors que la trame MAC a subi plusieurs dizaines de période d'horloge de décalage. Ces systèmes présentent donc un problème de synchronisation du signal destiné à synchroniser le message.

Il est également connu dans l'état de la technique des systèmes et des procédés basés sur l'échange de paquets. Ce transfert utilise une interface de liaison standard et dédiée également au transfert des données. On peut par exemple citer la norme IEEE1588 (connue sous l'acronyme anglais de PTP pour « Precision Time Protocol ») qui a été proposée en 2002 pour répondre à des contraintes des procédés temps réel mis en oeuvre dans différents domaines techniques. Les demandes de brevet US 2012/0136956 A1 et US 2011/0161701 A1 portent toutes deux sur des mises en oeuvre de la norme IEEE 1588. Cette norme propose une solution très précise de synchronisation des horloges (cette précision est inférieure à la microseconde) de plusieurs équipements mis en réseau. Cependant comme cette norme est définie pour la synchronisation de plusieurs équipements répartis sur un réseau local, elle présente un procédé complexe. La complexité de ce procédé provient en particulier de la recherche du dispositif ayant l'horloge la plus précise afin d'en faire l'horloge maitre du réseau. Cette complexité rend son implémentation problématique dans un équipement ayant une faible capacité de calcul et de faibles ressources en mémoire.

La présente invention vise donc à remédier à ces problèmes en proposant un système et un procédé de synchronisation n'ayant pas besoin d'un ou plusieurs fils dédiés uniquement au transport d'un signal spécifique permettant la synchronisation et qui présente une complexité faible.

Ainsi l'invention propose un procédé de synchronisation horaire, entre deux dispositifs reliés par une liaison filaire Ethernet et comportant une horloge. Le procédé comporte les étapes suivantes :

- une étape de détermination d'une durée nécessaire à une transmission d'un paquet de données entre les deux dispositifs,
- une étape d'émission par l'un des dispositifs d'un paquet de données comportant une heure d'émission de ce paquet,
- une étape de détermination de l'heure par l'autre dispositif par ajout de la durée de transmission à l'heure d'émission du paquet,

lesdites étapes de détermination d'une durée nécessaire à une transmission, d'émission par l'un des dispositifs d'un paquet de données et de détermination de l'heure par l'autre dispositif utilisant des paquets de trames MAC Ethernet.

Les horloges des deux dispositifs peuvent être indépendantes si les dispositifs sont distants ou issues d'une même source si les deux dispositifs sont proches.

Avantageusement le procédé comporte en outre :

- une étape de détermination d'une dérive temporelle d'une horloge d'un des dispositifs par rapport à l'horloge de l'autre dispositif,
- une étape de correction de cette dérive temporelle de l'horloge, ladite correction est mise en oeuvre en avançant l'horloge du dispositif dont l'horloge est en retard ou en retardant de l'horloge du dispositif dont l'horloge est en en avance.

Avantageusement l'étape de détermination d'une dérive temporelle comporte les étapes suivantes :

- une étape d'émission d'un premier paquet de données et de sauvegarde d'une heure d'envoi du paquet par l'un des dispositifs, ledit paquet étant émis à destination de l'autre dispositif,
- une étape de réception du premier paquet et de sauvegarde d'une heure de réception par l'autre dispositif,
- une étape d'envoi d'un deuxième paquet, par l'autre dispositif, ledit deuxième paquet comportant ladite heure de réception,
- une étape de réception dudit deuxième paquet par le dispositif,
- une étape de détermination de la dérive à partir de l'heure d'envoi, de l'heure de réception et de la durée de transmission.

Avantageusement l'étape de détermination de la dérive est adaptée pour l'utilisation de la relation suivante :

$$derive = t_{recep} - t_{envoi} - TL$$

dans laquelle $t_{envoi}$ représente l'heure d'envoi du premier paquet, $t_{recep}$ représente l'heure de réception du deuxième paquet, $TL$ représente la durée de transmission et *derive* représente le dérive de l'horloge.

Avantageusement l'étape de détermination d'une durée de transmission comporte les étapes suivantes :

- une étape d'émission d'un premier paquet de données et de sauvegarde d'une heure d'envoi, par l'un des dispositifs, demandant à un autre dispositif l'émission d'un deuxième paquet de données en retour,
- une étape de réception dudit premier paquet par l'autre dispositif
- une étape d'émission d'un deuxième paquet par l'autre dispositif pouvant contenir une indication d'une durée d'un traitement séparant la réception du premier paquet et l'émission du deuxième paquet,
- une étape de réception du deuxième paquet et de sauvegarde d'une heure de réception du deuxième paquet par le dispositif,
- une étape de détermination de la durée de transmission à partir de l'heure d'envoi, l'heure de réception et de la durée de traitement.

Avantageusement l'étape de détermination de la durée de transmission est adaptée pour l'utilisation de la relation suivante :

$$TL = (t_{recep} - t_{envoi} - TLDPG)/2$$

dans laquelle $t_{envoi}$ représente l'heure d'envoi du premier paquet, $t_{recep}$ représente l'heure de réception du deuxième paquet, $TLDPG$ représente la durée de traitement et $TL$ représente la durée de transmission.

L'invention concerne également un système qui comprend deux dispositifs reliés par une liaison filaire Ethernet. Les dispositifs comprennent :

- des moyens de synchronisation configurés pour la mise en oeuvre du procédé de synchronisation horaire, et
- une horloge.

Avantageusement les paquets de données échangés entre lesdits dispositifs sont générés par une couche MAC.

Avantageusement les horloges des dispositifs sont basées sur l'incrément d'un compteur au rythme d'une horloge utilisée par ladite liaison Ethernet.

Avantageusement les moyens de synchronisation sont un FPGA, un ASIC ou un compostant externe.

Les avantages de cette invention sont les suivants :

L'invention utilise des paquets de trames MAC Ethernet standard, selon l'un des standards de la norme IEEE 802.3. L'utilisation de ces paquets MAC standard permet de disposer de circuits meilleurs marchés.

Le protocole est ajusté au besoin de synchronisation d'une liaison en point à point et ne présente pas la complexité des procédés de synchronisation connus dans l'état de la technique.

La synchronisation est la plus fine possible puisqu'elle utilise directement l'horloge utilisée par la couche MAC et la liaison Ethernet.

Il n'y a pas de modifications apportées sur la couche liaison de données.

Enfin ce procédé ne nécessite pas une transmission continue sur la liaison Ethernet, ce qui permet d'éviter une utilisation inutile de la liaison et donc une consommation inutile.

De plus le procédé est avantageux même entre deux dispositifs rapprochés (entre 2 cartes internes à un équipement) qui dans ce cas de configuration peuvent disposer de la même horloge. En effet les contraintes de place et de coûts favorisent les interfaces de type série rapide. Dans ce cas il n'y a plus la problématique de glissement des horloges (sauf si les horloges n'ont pas le même pilote), une fois que les dispositifs sont synchronisés.

L'invention sera mieux comprise et d'autres avantages apparaîtront à la lecture de la description détaillée faite à titre d'exemple non limitatif et à l'aide des figures parmi lesquelles :

- la figure 1 présente le procédé de synchronisation temporelle.
- la figure 2 présente une amélioration du procédé synchronisation temporelle pour le cas de la suivie de la dérive.
- la figure 3.a présente la description d'un mode de réalisation de l'étape de détermination d'une durée nécessaire à une transmission d'un paquet de données entre les deux dispositifs.

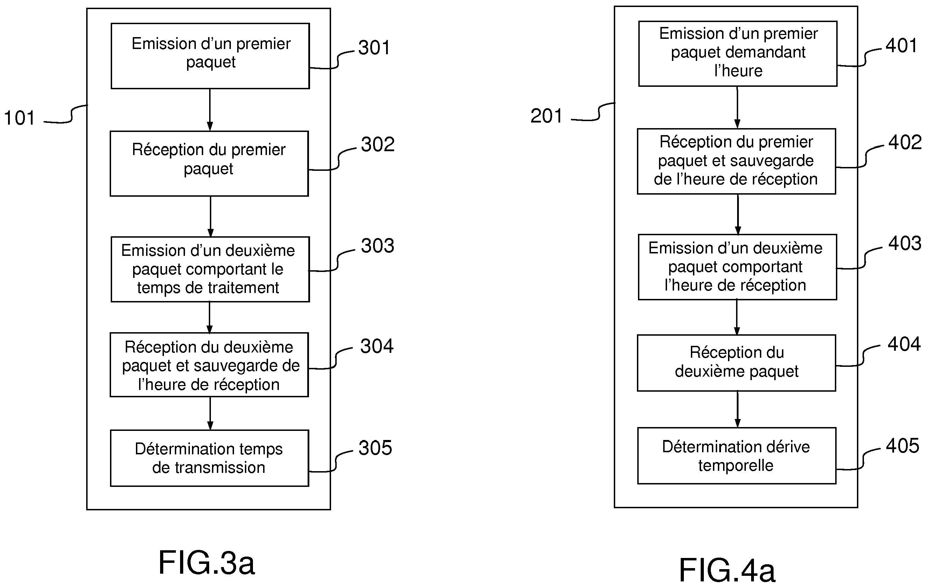

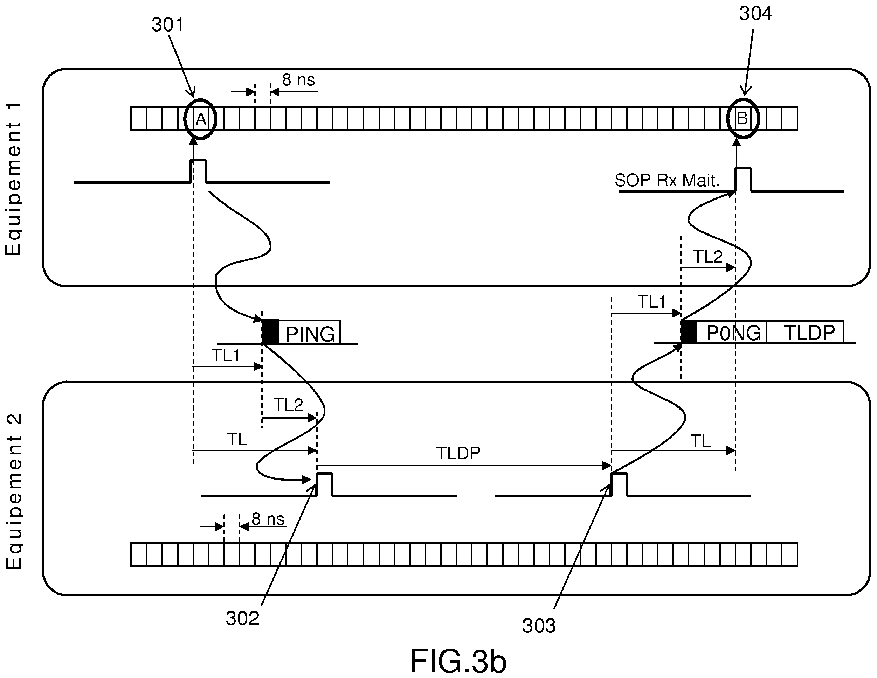

- La figure 3.b présente le logigramme de l'étape de détermination d'une durée nécessaire à une transmission d'un paquet de données entre les deux dispositifs.

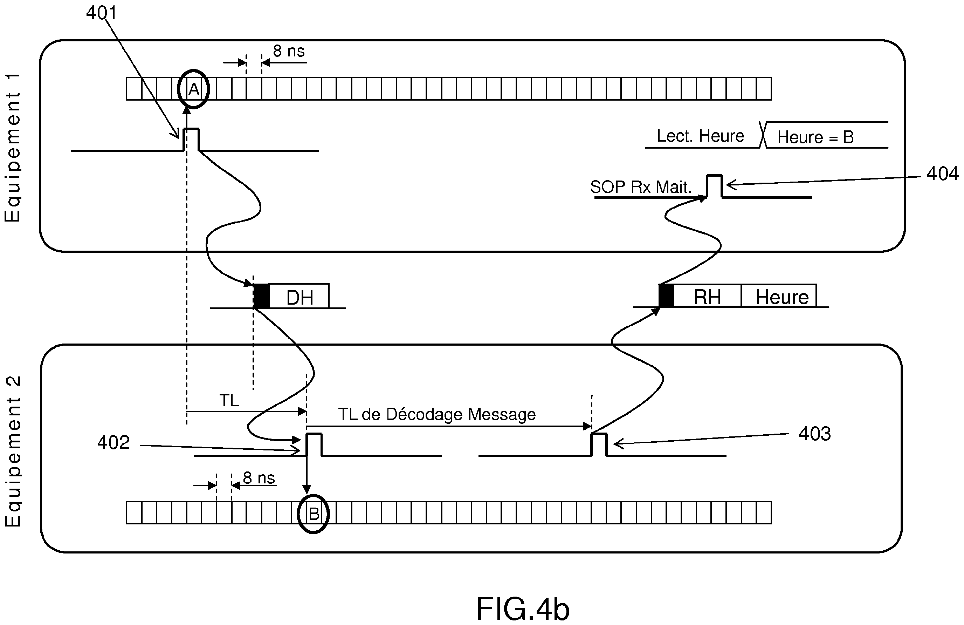

- la figure 4.a présente la description d'un mode de réalisation de l'étape de détermination d'une dérive temporelle.
- la figure 4.b présente le logigramme de l'étape de détermination d'une dérive temporelle.

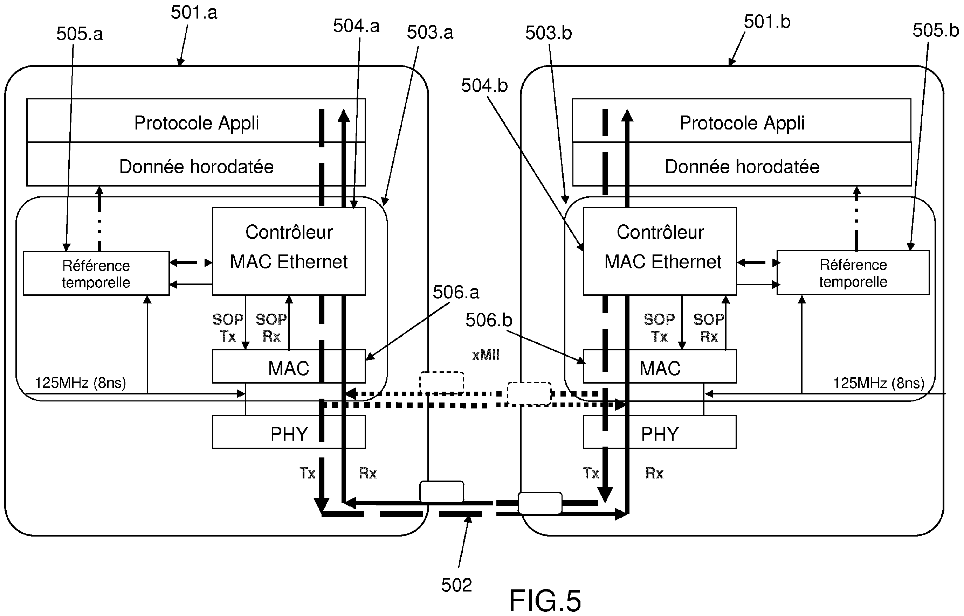

- la figure 5 présente un mode de réalisation d'un système selon l'invention.

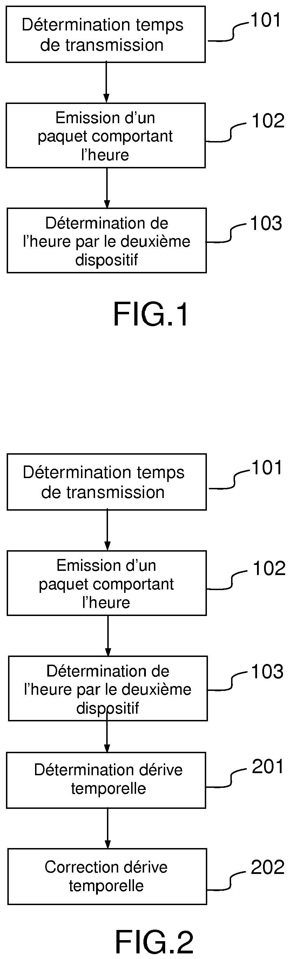

La figure 1 décrit le procédé de synchronisation temporelle entre deux dispositifs. Ce procédé comporte les étapes suivantes :

- Une étape 101 de détermination d'une durée nécessaire à une transmission d'un paquet de données entre le premier et le deuxième dispositif.
- Une étape 102 d'émission, par l'un des deux dispositifs, d'un paquet de données comportant une heure d'émission de ce paquet.
- Une étape 103 de détermination de l'heure, par l'autre dispositif, par ajout de la durée de transmission à l'heure d'émission du paquet.

Ce procédé permet donc de synchroniser l'heure du deuxième dispositif sur l'heure du premier dispositif.

Dans un mode de réalisation présenté par la figure 2, le procédé comporte deux étapes qui permettent de corriger une dérive temporelle de l'horloge interne d'un des équipements par rapport à l'horloge interne de l'autre équipement. Ces deux étapes sont les suivantes :

- Une étape 201 de détermination d'une dérive temporelle d'une horloge d'un des dispositifs par rapport à l'horloge de l'autre dispositif.
- Une étape 202 de correction de cette dérive temporelle par l'un ou l'autre des dispositifs. Il est possible de corriger l'horloge du dispositif qui est en avance en retardant son horloge ou de corriger l'horloge du dispositif qui est en retard en avançant son horloge.

La figure 3.a présente la description d'un mode de réalisation de l'étape 101 de détermination d'une durée nécessaire à une transmission d'un paquet de données entre les deux dispositifs. A titre illustratif et non limitatif c'est le premier dispositif qui va initier le procédé, cependant il est possible que cette initialisation soit réalisée par le deuxième dispositif. La détermination de cette durée de transmission se base sur les étapes suivantes :

- Une étape 301 d'émission d'un premier paquet de données par le premier dispositif. Dans ce premier paquet de données il est indiqué que le deuxième dispositif doit renvoyer un paquet de données indiquant la durée que le deuxième dispositif a mis pour traiter le paquet de données. De plus le premier dispositif sauvegarde l'heure d'envoi ($t_{envoi}$) du paquet de données.
- Une étape 302 de réception du premier paquet de données. Le délai qui a été nécessaire à la transmission du paquet de données comporte deux parties *TL1* et *TL2.* On note *TL* le délai complet de transmission.

*TL1* correspond au temps mis pour que les circuits en charge de la gestion Ethernet (partie couche MAC ou couche MAC plus couche PHY) pour transmettre physiquement la trame sur l'interface à partir de l'instant ou l'ordre d'émission a été donné. Ce temps (en période d'horloge à 125MHz pour le gigabit Ethernet) correspond au temps pour que ces circuits (en technologie synchrones) réalisent les traitements numériques nécessaires pour construire la trame et l'émettre sur l'interface. Ce temps est toujours le même pour un même type de circuit. A la réception le temps est différent car les traitements numérique ne sont pas les mêmes (les problématiques de réception ne sont pas les mêmes que les problématiques d'émission).

- Une étape 303 d'envoi d'un deuxième paquet, par le deuxième dispositif. Ce paquet inclut peut incorporer une indication de la durée de traitement *(TLDPG)* du paquet par le deuxième dispositif. Si l'indication de la durée de traitement *(TLDPG)* du paquet par le deuxième dispositif n'est pas compris dans le deuxième paquet elle peut être connue par le premier dispositif car chargée dans sa mémoire avant utilisation du procédé. En effet comme ce temps est fixe pour un dispositif donné il suffit que ce temps soit connu par le dispositif opposé pour appliquer la formule. Le fait de transmettre ce temps permet durant la phase de développement ou en cas de modifications ou d'évolutions d'un dispositif d'éviter de devoir également reprendre l'autre dispositif opposé qui utiliserait un temps fixe.

- Une étape 304 de réception du deuxième paquet par le premier dispositif et de sauvegarde de l'heure de réception ($t_{recep}$) par ce premier dispositif. On suppose que la durée de transmission d'un paquet entre le premier et le deuxième dispositif est identique à la durée de transmission entre le deuxième et le premier dispositif. Ceci provient de la symétrie de la conception.
- Une étape 305 de détermination de la durée de transmission à partir de l'heure d'envoi, de l'heure de réception et de la durée de traitement. La détermination est réalisée en utilisant la formule suivante :

$$TL = (t_{recep} - t_{envoi} - TLDPG)/2$$

La figure 3.b présente le logigramme de l'étape de détermination d'une durée nécessaire à une transmission d'un paquet de données entre les deux dispositifs.

La figure 4.a décrit un mode de réalisation de l'étape 201 de détermination d'une dérive temporelle. A titre illustratif et non limitatif c'est le premier dispositif qui va initier le procédé, cependant il est possible que cette initialisation soit réalisée par le deuxième dispositif. La détermination de cette dérive temporelle est basée sur les étapes suivantes :

- Une étape 401 d'émission d'un premier paquet, par le premier dispositif, demandant l'heure au deuxième dispositif. De plus le premier dispositif sauvegarde de l'heure d'envoi ($t_{envoi}$) du paquet de données.

- Une étape 402 de réception du premier paquet et de sauvegarde de l'heure de réception de ce paquet ($t_{recep}$). Ces deux opérations sont réalisées par le deuxième dispositif.
- Une étape 403 d'envoi, par le deuxième dispositif d'un deuxième paquet comportant l'heure de réception du premier paquet par le deuxième dispositif.
- Une étape 404 de réception du deuxième paquet par le premier dispositif.
- Une étape 405 de détermination de la dérive à partir de l'heure d'envoi, de l'heure de réception et la durée de transmission ($TL$). La détermination est réalisée en utilisant la formule suivante :

$$derive = t_{recep} - t_{envoi} - TL$$

La figure 4.b présente le logigramme de l'étape de détermination d'une dérive temporelle à une transmission d'un paquet de données entre les deux dispositifs.

Comme la détermination d'une dérive temporelle nécessite la connaissance de la durée de transmission $TL$, il est donc nécessaire de réaliser, préalablement à l'étape de détermination d'une dérive temporelle l'étape de détermination d'une durée de transmission et l'étape de mise à l'heure des deux dispositifs.

Le procédé de l'invention peut-être mis en oeuvre dans un système tel que représenté figure 5. Ce système comporte deux dispositifs (501.a et 501.b) qui sont reliés par une liaison 502. Cette liaison peut être une liaison Ethernet (il est préférable d'utiliser une liaison de type Gigabit Ethernet pour disposer d'un débit et d'une précision élevée) mais il est aussi possible d'utiliser d'autres types de liaison connues de l'homme du métier.

Ainsi pour pouvoir réaliser une liaison Ethernet jusqu'à 100m sur 4 paires de fils (par exemple une liaison gigabit internet utilisant 4 Pairs différentiels bidirectionnelles avec des informations codées sur 2 bits), il est nécessaire de mettre les circuits d'interface de la couche PHY (c'est la configuration nominale). Toutefois pour des dispositifs proches (de carte à carte) il est possible de ne pas mettre ces drivers ou circuits de réalisation des fonctions de la couche PHY et de réaliser directement une liaison entre les composants MAC. Cela permet d'économiser de la place, de limiter le prix des composants et de limiter la consommation.

Une liaison Ethernet est classiquement réalisée par deux circuits distincts : un circuit comportant la fonctionnalité de la partie MAC et un circuit comportant la fonctionnalité de la partie PHY. La fonctionnalité de la partie PHY a pour rôle de garantir l'intégrité de l'information émise sur plusieurs dizaines de mètres en adaptant le signal au canal de transmission. Le canal de transmission est par exemple constitué par le câble reliant les deux cartes. Ainsi le composant PHY est différent si le média est un câble de cuivre ou si le média est une fibre optique.

Mais lorsque la distance entre les deux dispositifs à relier n'est que de quelques centimètres, la présence d'un circuit PHY n'est plus justifiée. Il est tout à fait possible dans ce cas et moyennant quelques spécificités du composant assurant la fonctionnalité MAC de faire une liaison dite de « MAC à MAC » sans circuit PHY intermédiaire. En fonction des contraintes du système cela permet de gagner en consommation en place et en coût de production. Dans ce cas l'interface entre les deux composants réalisant la fonctionnalité MAC est une liaison connue sous l'acronyme anglais SGMII pour Serial Gigabit Media Independent Interface ou interface série indépendante pour média Gigabit pour limiter le nombre de signaux et rendre les différences entre les médias transparentes pour la sous-couche MAC de la couche liaison de donnée. On peut noter que cette spécificité est propre à l'interface Ethernet. Elle consiste à disposer d'un MAC « slave » et d'un MAC « master ».

Ces deux dispositifs comporte chacun un circuit logique programmable (503.a et 503.b) de type FPGA ou ASIC. FPGA est l'acronyme anglais de « field-programmable gâte array » pour réseau de portes programmables. ASIC est un acronyme anglais signifiant Application-Specific Integrated Circuit, pour Circuit intégré propre à une application en français. Ces FPGA ou ASIC ont pour rôle de contrôler la liaison Ethernet. Ainsi conformément à ce qui est présenté sur la figure 5 la zone 503.a ou 503.b comporte trois fonctionnalités distinctes :

- Les 506.a et 506.b réalisent la fonction MAC définie par la norme Ethernet pour l'accès au média. Il existe plusieurs fournisseurs qui proposent cette fonctionnalité sous forme d'une zone logique ou logique IP pour Intellectual Property.
- Les zones 504.a et 504.b sont chargées de réaliser la gestion et le contrôle de la couche MAC.
- Les zones 505.a et 505.b constituent la référence temporelle. Cette référence peut être réalisée par un compteur qui s'incrémente au rythme de l'horloge utilisée par la liaison Ethernet (Cette horloge est à une fréquence de 125MHz dans le cadre de l'utilisation de Gigabit Ethernet).

Ces trois zones sont implémentées dans un FPGA ou dans un ASIC.
Les traitements liés à la fonction PHY ne sont pas intégrés au FPGA ou à l'ASIC.

Dans un mode de réalisation il est aussi possible d'utiliser des composants externes chargés pour réaliser la fonction MAC.

Dans le cas de ce dispositif, l'étape 101 de détermination d'une durée nécessaire à une transmission d'un paquet de données entre les deux dispositifs est réalisée de la manière suivante :

L'étape 301 d'émission d'un premier paquet de données par le premier dispositif est réalisée via l'utilisation de la zone 504.a qui contrôle la couche MAC et la liaison l'Ethernet et qui permet de générer un signal d'émission de paquet de données (Start of Packet ou l'acronyme SOP en anglais). L'émission de ce signal permet d'indiquer à la couche MAC que cette dernière doit émettre une trame Ethernet. Simultanément, l'heure d'émission est sauvegardée via l'utilisation de la référence temporelle intégrée dans le dispositif.

L'étape 302 de réception du premier paquet de données est réalisée via l'une des zones 504.a ou 504.b en charge du contrôle de la couche MAC et la liaison Ethernet du deuxième dispositif. Cette logique ou zone logique se base alors sur les signaux indiquant l'arrivée du message (connu aussi sous l'acronyme anglais de SOP Rx pour Start of Packet Rx). D ans un autre mode de réalisation, zones logiques ou logiques MAC ne fournissent pas forcement le signal SOP Rx. Le contrôleur de la fonction MAC (zone 504.b) doit donc le générer à partir des autres signaux d'interface du MAC.

L'étape 303, d'envoi d'un deuxième paquet, par le deuxième dispositif est réalisée par la zone 504.b. Cette zone logique déclenche, à la réception d'un signal indiquant l'arrivée du message, une procédure synchrone de renvoi d'un message. Ce message est renvoyé au bout d'une durée *(TLDPG).* Le message contient la durée de traitement *(TLDPG).* Cette durée va dépendre de la manière dont est implémenté le procédé et des performances du dispositif sur lequel ce procédé est implémenté. Ce deuxième paquet n'est cependant renvoyer que si le premier paquet reçu demande l'émission d'un message en retour.

L'étape 304 de réception du deuxième paquet par le premier dispositif est réalisée via la zone logique 504.a. Cette zone permet la détermination de l'heure de réception ($t_{recep}$) à partir de la référence temporelle intégrée au dispositif. L'information de la durée de traitement *(TLDPG)* contenue dans le message est également sauvegardée.

Enfin l'étape 305 de détermination de la durée de transmission est réalisée par la zone logique 504.a.

Dans le cas du dispositif présenté figure 5, l'étape 201 de détermination d'une dérive temporelle est réalisée de la manière suivante :

L'étape 401 d'émission d'un premier paquet demandant l'heure au deuxième dispositif et de sauvegarde d'une heure d'envoi ($t_{envoi}$) est réalisé via l'utilisation de la zone logique 504.a qui permet de générer un signal d'émission de paquet de données (Start of Packet ou l'acronyme SOP en anglais). L'émission de ce signal permet d'indiquer à la couche MAC Ethernet que cette dernière doit émettre une trame Ethernet. Simultanément, l'heure d'émission est sauvegardée via l'utilisation de la référence temporelle intégrée dans le dispositif.

L'étape 402 de réception du premier paquet et de sauvegarde d'une première heure de réception ($t_{recep}$) est réalisé par la zone logique 504.b. Cette zone logique se base alors sur les signaux indiquant l'arrivée du message (connu aussi sous l'acronyme anglais de SOP Rx pour Start of Packet Rx). De plus Cette zone permet la détermination de l'heure de réception ($t_{recep}$) à partir de la référence temporelle intégrée au dispositif.

L'étape 403 d'envoi d'un deuxième paquet comportant l'heure de réception du premier paquet par le deuxième dispositif est réalisée par la zone logique 504.b.

L'étape 404 de réception du deuxième paquet est réalisée par la zone logique 504.a.

Enfin l'étape 405 de détermination de la dérive est réalisée par la zone logique 504.a.

**Revendications**

1. Procédé de synchronisation horaire, entre deux dispositifs reliés par une liaison filaire Ethernet, ledit procédé comportant les étapes suivantes :

   • une étape (101) de détermination d'une durée nécessaire à une transmission d'un paquet de données entre les deux dispositifs,
   • une étape (102) d'émission par l'un des dispositifs d'un paquet de données comportant une heure d'émission de ce paquet,
   • une étape (103) de détermination de l'heure par l'autre dispositif par ajout de la durée de transmission à l'heure d'émission du paquet,

   lesdites étapes de détermination d'une durée nécessaire à une transmission (101), d'émission par l'un des dispositifs d'un paquet de données (102) et de détermination de l'heure par l'autre dispositif (103) utilisant des paquets de données générés par une couche MAC, et utilisant comme référence temporelle un compteur incrémenté au rythme d'une horloge utilisée par ladite liaison Ethernet.

2. Procédé de synchronisation horaire selon la revendication 1 comportant en outre :

   • une étape (201) de détermination d'une dérive temporelle d'une horloge d'un des dispositifs par rapport à l'horloge de l'autre dispositif,
   • une étape (202) de correction de cette dérive temporelle de l'horloge, ladite correction est mise en oeuvre en avançant l'horloge du dispositif dont l'horloge est en retard ou en retardant de l'horloge du dispositif dont l'horloge est en en

11 EP 2 866 365 B1 12

avance.

**3.** Procédé de synchronisation horaire selon la revendication 2 dans lequel l'étape de détermination d'une dérive temporelle comporte les étapes suivantes

• une étape (401) d'émission d'un premier paquet de données et de sauvegarde d'une heure d'envoi du paquet par l'un des dispositifs, ledit paquet étant émis à destination de l'autre dispositif,
• une étape (402) de réception du premier paquet et de sauvegarde d'une heure de réception par l'autre dispositif,
• une étape (403) d'envoi d'un deuxième paquet, par l'autre dispositif, ledit deuxième paquet comportant ladite heure de réception,
• une étape (404) de réception dudit deuxième paquet par le dispositif,
• une étape (405) de détermination de la dérive à partir de l'heure d'envoi, de l'heure de réception et de la durée de transmission.

**4.** Procédé de synchronisation horaire selon la revendication 3 dans lequel ladite étape de détermination de la dérive est adaptée pour l'utilisation de la relation suivante :

$$derive = t_{recep} - t_{envoi} - TL$$

dans laquelle $t_{envoi}$ représente l'heure d'envoi du premier paquet, $t_{recep}$ représente l'heure de réception du deuxième paquet, $TL$ représente la durée de transmission et *derive* représente le dérive de l'horloge.

**5.** Procédé de synchronisation horaire selon la revendication 1 à 4 dans lequel ladite étape de détermination d'une durée de transmission comporte les étapes suivantes :

• une étape (301) d'émission d'un premier paquet de données et de sauvegarde d'une heure d'envoi, par l'un des dispositifs, demandant à un autre dispositif l'émission d'un deuxième paquet de données en retour,
• une étape (302) de réception dudit premier paquet par l'autre dispositif
• une étape (303) d'émission d'un deuxième paquet par l'autre dispositif pouvant contenir une indication d'une durée d'un traitement séparant la réception du premier paquet et l'émission du deuxième paquet,
• une étape (304) de réception du deuxième paquet et de sauvegarde d'une heure de réception du deuxième paquet par le dispositif,

• une étape (305) de détermination de la durée de transmission à partir de l'heure d'envoi, l'heure de réception et de la durée de traitement.

**6.** Procédé de synchronisation horaire selon la revendication 5 dans lequel ladite étape de détermination de la durée de transmission est adaptée pour l'utilisation de la relation suivante :

$$TL = (t_{recep} - t_{envoi} - TLDPG)/2$$

dans laquelle $t_{envoi}$ représente l'heure d'envoi du premier paquet, $t_{recep}$ représente l'heure de réception du deuxième paquet, $TLDPG$ représente la durée de traitement et $TL$ représente la durée de transmission.

**7.** Système comprenant deux dispositifs reliés par une liaison filaire Ethernet, lesdits dispositifs comprenant :

• des moyens de synchronisation configurés pour la mise en oeuvre du procédé de synchronisation horaire selon l'une des revendications 1 à 6 et
• une horloge.

**8.** Système selon la revendication 7 dans lequel lesdits moyens de synchronisation sont un FPGA ou un ASIC.

**Patentansprüche**

**1.** Verfahren zur Uhrzeitsynchronisierung zwischen zwei durch eine Ethernet-Drahtverbindung verbundenen Vorrichtungen, wobei das Verfahren folgende Schritte beinhaltet:

• einen Schritt (101) des Bestimmens einer zur Übertragung eines Datenpaketes zwischen den beiden Vorrichtungen notwendigen Dauer,
• einen Schritt (102) des Sendens eines Datenpaketes durch eine der Vorrichtungen, welches eine Sendeuhrzeit dieses Paketes beinhaltet,
• einen Schritt (103) des Bestimmens der Uhrzeit durch die andere Vorrichtung durch Hinzufügen der Übertragungsdauer zur Sendeuhrzeit des Paketes,

wobei die Schritte des Bestimmens einer zu einer Übertragung (101) notwendigen Dauer, des Sendens eines Datenpaketes (102) durch eine der Vorrichtungen und des Bestimmens der Uhrzeit durch die andere Vorrichtung (103) durch eine MAC-Schicht erzeugte Datenpakete verwenden und als Zeitreferenz einen Zähler verwenden, welcher im Rhythmus einer durch die Ethernetverbindung verwendeten Uhr inkrementiert wird.

2. Verfahren zur Uhrzeitsynchronisierung nach Anspruch 1, welches zudem folgende Schritte beinhaltet:

> • einen Schritt (201) des Bestimmens eines Zeitdrifts einer Uhr einer der Vorrichtungen in Bezug auf die Uhr der anderen Vorrichtung,
> • einen Schritt (202) des Korrigierens dieses Zeitdrifts der Uhr, wobei die Korrektur umgesetzt wird, indem die Uhr der Vorrichtung, deren Uhr nachgeht, vorgestellt wird, oder indem die Uhr der Vorrichtung, deren Uhr vorgeht, zurückgestellt wird.

3. Verfahren zur Uhrzeitsynchronisierung nach Anspruch 2, bei welchem der Schritt des Bestimmens eines Zeitdrifts folgende Schritte beinhaltet:

> • einen Schritt (401) des Sendens eines ersten Datenpaketes und des Abspeicherns einer Sendeuhrzeit des Paketes durch eine der Vorrichtungen, wobei das Paket an die andere Vorrichtung gesendet wird,
> • einen Schritt (402) des Empfangens des ersten Paketes und des Abspeicherns einer Empfangsuhrzeit durch die andere Vorrichtung,
> • einen Schritt (403) des Sendens eines zweiten Paketes, durch die andere Vorrichtung, wobei das zweite Paket die Empfangsuhrzeit beinhaltet,
> • einen Schritt (404) des Empfangens des zweiten Paketes durch die Vorrichtung,
> • einen Schritt (405) des Bestimmens des Drifts anhand der Sendeuhrzeit, der Empfangsuhrzeit und der Übertragungsdauer.

4. Verfahren zur Uhrzeitsynchronisierung nach Anspruch 3, bei welchem der Schritt des Bestimmens des Drifts für die Verwendung der folgenden Beziehung geeignet ist:

$$Drift = t_{Empfang} - t_{Sendung} - TL$$

wobei $t_{Sendung}$ die Sendeuhrzeit des ersten Paketes darstellt, $t_{Empfang}$ die Empfangsuhrzeit des zweiten Paketes darstellt, TL die Übertragungsdauer darstellt und *Drift* den Drift der Uhr darstellt.

5. Verfahren zur Uhrzeitsynchronisierung nach Anspruch 1 bis 4, bei welchem der Schritt des Bestimmens einer Übertragungsdauer folgende Schritte beinhaltet:

> • einen Schritt (301) des Sendens eines ersten Datenpaketes und des Abspeicherns einer Sendeuhrzeit durch eine der Vorrichtungen, welches von einer anderen Vorrichtung im Gegenzug die Sendung eines zweiten Datenpaketes anfordert,
> • einen Schritt (302) des Empfangens des ersten Paketes durch die andere Vorrichtung,
> • einen Schritt (303) des Sendens eines zweiten Paketes durch die andere Vorrichtung, welches eine Angabe zu einer Verarbeitungsdauer enthalten kann, welche den Empfang des ersten Paketes von der Sendung des zweiten Paketes trennt,
> • einen Schritt (304) des Empfangens des zweiten Paketes und des Abspeicherns einer Empfangsuhrzeit des zweiten Paketes durch die Vorrichtung,
> • einen Schritt (305) des Bestimmens der Übertragungsdauer anhand der Sendeuhrzeit, der Empfangsuhrzeit und der Verarbeitungsdauer.

6. Verfahren zur Uhrzeitsynchronisierung nach Anspruch 5, bei welchem der Schritt des Bestimmens der Übertragungsdauer für die Verwendung der folgenden Beziehung geeignet ist:

$$TL = (t_{Empfang} - t_{Sendung} - TLDPG)/2$$

wobei $t_{Sendung}$ die Sendeuhrzeit des ersten Paketes darstellt, $t_{Empfang}$ die Empfangsuhrzeit des zweiten Paketes darstellt, *TLDPG* die Verarbeitungsdauer darstellt und *TL* die Übertragungsdauer darstellt.

7. System, welches zwei durch eine Ethernet-Drahtverbindung verbundene Vorrichtungen beinhaltet, wobei die Vorrichtungen Folgendes beinhalten:

> • Synchronisierungsmittel, welche konfiguriert sind zur Umsetzung des Verfahrens zur Uhrzeitsynchronisierung nach einem der Ansprüche 1 bis 6 und
> • eine Uhr.

8. System nach Anspruch 7, bei welchem die Synchronisierungsmittel ein FPGA oder ein ASIC sind.

**Claims**

1. A method for clock synchronization between two devices connected by an Ethernet wire connection, said method comprising the following steps:

> • a step (101) of determining a duration necessary for transmission of a data packet between the two devices,
• a step (102) of emission of a data packet by one of the devices, comprising an emission time of that packet,
• a step (103) of determining the time by the other device by adding the transmission duration to the emission time of the packet,

said steps of determining a duration necessary for transmission (101), of emission of a data packet (102) by one of the devices and of determining the time by the other device (103) using data packets generated by an MAC layer, and using as a time reference a counter incremented at the rate of a clock used by said Ethernet connection.

2. The method for clock synchronization according to claim 1, further comprising:

• a step (201) of determining a time drift of a clock of one of the devices relative to the clock of the other device,
• a step (202) of correction of this time drift of the clock, said correction being carried out by putting forward the clock of the device of which the clock is late or by putting back the clock of the device of which the clock is fast.

3. The method for clock synchronization according to claim 2, wherein the step of determining a time drift comprises the following steps:

• a step (401) of emission of a first data packet and of saving a sending time of the packet by one of the devices, said packet being emitted to the other device,
• a step (402) of reception of the first packet and of saving a reception time by the other device,
• a step (403) of sending a second packet, by the other device, said second packet comprising said reception time,
• a step (404) of reception of said second packet by the device,
• a step (405) of determining the drift on the basis of the sending time, the reception time and the transmission duration.

4. The method for clock synchronization according to claim 3, wherein said step of determining the drift is adapted for using the following relationship:

$$drift = t_{receiv} - t_{send} - TL$$

wherein $t_{send}$ represents the sending time of the first packet, $t_{receiv}$ represents the reception time of the second packet, $TL$ represents the transmission duration and *drift* represents the drift of the clock.

5. The method for clock synchronization according to claim 1 to 4, wherein said step of determining a transmission duration comprises the following steps:

• a step (301) of emission of a first data packet and of saving a sending time, by one of the devices, asking another device to emit a second data packet in return,
• a step (302) of reception of said first packet by the other device,
• a step (303) of emission of a second packet by the other device, being able to contain an indication of a duration of a processing operation separating the reception of the first packet and the emission of the second packet,
• a step (304) of reception of the second packet and of saving a reception time of the second packet by the device,
• a step (305) of determining the transmission duration on the basis of the sending time, the reception time and the processing duration.

6. The method for clock synchronization according to claim 5, wherein said step of determining the transmission duration is adapted for using the following relationship:

$$TL = (t_{receiv} - t_{send} - TLDPG)/2$$

wherein $t_{send}$ represents the sending time of the first packet, $t_{receiv}$ represents the reception time of the second packet, *TLDPG* represents the processing duration and *TL* represents the transmission duration.

7. A system comprising two devices connected by an Ethernet wire connection, said devices comprising:

• synchronization means configured for carrying out the clock synchronization method according to any of claims 1 to 6, and
• a clock.

8. The system according to claim 7, wherein said synchronization means are an FPGA or an ASIC.

```
┌─────────────────────┐
│  Détermination temps │ ⌐101
│   de transmission    │
└─────────────────────┘
          │
          ▼
┌─────────────────────┐
│    Emission d'un     │ ⌐102
│   paquet comportant  │
│       l'heure        │
└─────────────────────┘
          │
          ▼
┌─────────────────────┐
│   Détermination de   │ ⌐103
│  l'heure par le deuxième │
│     dispositif       │
└─────────────────────┘
```

# FIG.1

```
┌─────────────────────┐
│  Détermination temps │ ⌐101
│   de transmission    │
└─────────────────────┘
          │
          ▼
┌─────────────────────┐
│    Emission d'un     │ ⌐102
│   paquet comportant  │
│       l'heure        │
└─────────────────────┘
          │
          ▼
┌─────────────────────┐
│   Détermination de   │ ⌐103
│  l'heure par le deuxième │
│     disppsitif       │
└─────────────────────┘
          │
          ▼
┌─────────────────────┐
│  Détermination dérive │ ⌐201
│     temporelle       │
└─────────────────────┘
          │
          ▼
┌─────────────────────┐
│   Correction dérive  │ ⌐202
│     temporelle       │
└─────────────────────┘
```

# FIG.2

EP 2 866 365 B1

101

```
┌─────────────────────────────┐
│   ┌─────────────────────┐   │
│   │  Emission d'un premier │   │ ─── 301
│   │       paquet           │   │
│   └─────────────────────┘   │
│            │                 │
│            ▼                 │
│   ┌─────────────────────┐   │
│   │  Réception du premier │   │ ─── 302
│   │       paquet           │   │
│   └─────────────────────┘   │
│            │                 │
│            ▼                 │
│   ┌─────────────────────┐   │
│   │ Emission d'un deuxième │   │ ─── 303
│   │  paquet comportant le  │   │
│   │   temps de traitement  │   │
│   └─────────────────────┘   │
│            │                 │
│            ▼                 │
│   ┌─────────────────────┐   │
│   │ Réception du deuxième │   │ ─── 304
│   │ paquet et sauvegarde de│   │
│   │   l'heure de réception │   │
│   └─────────────────────┘   │
│            │                 │
│            ▼                 │
│   ┌─────────────────────┐   │
│   │ Détermination temps   │   │ ─── 305
│   │   de transmission      │   │
│   └─────────────────────┘   │
└─────────────────────────────┘
```

FIG.3a

201

```
┌─────────────────────────────┐
│   ┌─────────────────────┐   │
│   │  Emission d'un premier │   │ ─── 401
│   │   paquet demandant     │   │
│   │        l'heure         │   │
│   └─────────────────────┘   │
│            │                 │
│            ▼                 │
│   ┌─────────────────────┐   │
│   │  Réception du premier │   │ ─── 402
│   │ paquet et sauvegarde   │   │
│   │  de l'heure de réception│   │
│   └─────────────────────┘   │
│            │                 │
│            ▼                 │
│   ┌─────────────────────┐   │
│   │ Emission d'un deuxième │   │ ─── 403
│   │  paquet comportant     │   │
│   │  l'heure de réception  │   │
│   └─────────────────────┘   │
│            │                 │
│            ▼                 │
│   ┌─────────────────────┐   │
│   │    Réception du        │   │ ─── 404
│   │   deuxième paquet      │   │
│   └─────────────────────┘   │
│            │                 │
│            ▼                 │
│   ┌─────────────────────┐   │
│   │ Détermination dérive  │   │ ─── 405
│   │     temporelle         │   │
│   └─────────────────────┘   │
└─────────────────────────────┘
```

FIG.4a

FIG.3b

FIG.4b

FIG.5

## RÉFÉRENCES CITÉES DANS LA DESCRIPTION

**Documents brevets cités dans la description**

- US 20120136956 A1
- US 20110161701 A1